# EUROPEAN PATENT APPLICATION

(11) **EP 3 171 604 A1**
(43) Date of publication of application: **24.05.2017**
(21) Application number: 15821394.2
(22) Date of filing: 01.04.2015
(51) Int. Cl.: H04N 21/236, H04N 21/434

(54) **OPERATING METHOD OF CLIENT AND SERVER FOR STREAMING SERVICE**

(30) Priority: 16.07.2014 KR 20140089679
(71) Applicant: Airbroad Inc., Seoul 03187 (KR)
(72) Inventor: KIM, Jae Kyeong, Seoul 151-835 (KR)
(74) Representative: Bianchetti Bracco Minoja S.r.l.
(86) International application number: PCT/KR2015/003230
(87) International publication number: WO 2016/010229

(57) **Abstract**

An operating method of a client and a server for a streaming service is disclosed. A client, according to one embodiment, transmits, to a server, a request packet including a parameter indicating a data request. A server, according to one embodiment, transmits, to the client, a response packet including data of an address range corresponding to the parameter.

## Description

### TECHNICAL FIELD

One or more example embodiments relate to an operating method of a client and a server for a streaming service.

### RELATED ART

The related art of the present disclosure is disclosed in the following:
1) Korean Patent Publication No. 2014-0054138 (published on May 8, 2014)
2) Korean patent Publication No. 2012-0117384 (published on October 24, 2012)

Many streaming techniques according to the related art have employed a streaming exclusive protocol, such as a real time streaming protocol (RTSP). However, the recent streaming techniques are designed to efficiently operate on a widely distributed HyperText Transfer Protocol (HTTP) network, such as the Internet. For example, an adaptive bitrate streaming technique is an HTTP-based streaming technique that may transmit contents of quality consumable at a bandwidth based on a network state or a transmission rate, etc.

The adaptive bitrate streaming technique divides and transmits a file based on a time unit. For example, the adaptive bitrate streaming technique may provide a streaming service using a chunk that stores content with a time length of two to ten seconds. Here, each of chunks to be transmitted is required to start as a predetermined key frame, such as an I-frame. To satisfy the condition, the adaptive bitrate streaming technique essentially requires a process of transcoding an image file to a streaming file. During the transcoding process, the quality of an image file maybe degraded. Further, additional time and computing power for transcoding may be additionally used.

Also, the adaptive bitrate streaming technique is to use a manifest file. The manifest file refers to a file that stores information about each of chunks of a streaming file. The manifest file is created when the image file is transcoded to the streaming file. According to the adaptive bitrate streaming technique, a client is to refer to the manifest file to utilize a streaming service.

### DESCRIPTION

### SUBJECTS

One or more example embodiments provide a HyperText Transfer Protocol (HTTP) based streaming technique using an image file format as is instead of using a streaming file format. One or more example embodiments also provide a technique that may divide and thereby transmit an image file based on a capacity unit. For example, one or more example embodiments may provide a streaming service for transmitting a portion of an image file based on a byte address unit without actually dividing the image file. Here, chunks to be transmitted has no need to start as a key frame, and a process of transcoding the image file to a streaming file may be omitted.

One or more example embodiments may prevent a degradation in quality occurring during transcoding and may reduce a server load by omitting a process of transcoding an image file to a streaming file. Also, one or more example embodiments may provide a further fast streaming service since a time for transcoding an image file to a streaming file is not used once the image file is uploaded to a server. Also, one or more example embodiments may not require a manifest file that stores chunk information of a streaming file since the streaming file is not created separately.

### SOLUTIONS

According to an aspect, there is provided an operating method of a client for a streaming service, the method including transmitting a first request packet that includes a file uniform resource locator (URL) and a first parameter instructing a playback information request; receiving a first response packet that includes playback information of a file corresponding to the file URL; transmitting a second request packet that includes the file URL and a second parameter instructing a data request; and receiving a second response packet that includes data of an address range corresponding to the second parameter within the file.

The client operating method may further include setting the first parameter as a predetermined first instructor; and extracting a size used to divide the file, a number of chunks, a resolution of content stored in the file, a URL of a second file that stores content of a second resolution different from the resolution, and the second resolution from the first response packet.

The client operating method may further include setting the second parameter as an initial index; and inputting data of the second response packet to a buffer. The client operating method may further include checking a residual value of a buffer; setting the second parameter as an index of a chunk to be sequentially played back when the residual value of the buffer is less than or equal to a threshold; and inputting data of the second response packet to the buffer.

The client operating method may further include setting the second parameter as an initial index; and extracting an offset address for key frame information of the file from the second response packet. The client operating method may further include extracting the key frame information from the second response packet when data of the offset address is included in the second response packet.

The client operating method may further include setting a third parameter instructing a data request as the offset address when data of the offset address is not included in the second response packet; transmitting a third request packet that includes the file URL and the third parameter; receiving a third response packet that includes data of an address range corresponding to the third parameter within the file; and extracting the key frame information from the third response packet.

The client operating method may further include inputting data of the second response packet to a buffer; extracting key frames of the file during playback of the data; and creating key frame information of the file based on the key frames.

The client operating method may further include receiving a resolution change input; setting the file URL as a URL of a second file corresponding to a new resolution included in the resolution change input; setting the first parameter as a predetermined second instructor; and extracting a size of a chunk used to divide the second file and a number of chunks from the first response packet.

The client operating method may further include receiving a resolution change input; setting the file URL as a URL of a second file corresponding to a new resolution included in the resolution change input; detecting a key frame corresponding to a current playback time based on key frame information of the second file; setting the second parameter as an address of the detected key frame; and inputting data of the second response packet to a buffer.

The client operating method may further include receiving a resolution change input; setting the file URL as a URL of a second file corresponding to a new resolution included in the resolution change input; estimating a chunk corresponding to a current playback time based on the current playback time and a total playback time; setting the second parameter as an index of the estimated chunk; detecting a key frame closest to the current playback time from data of the second response packet when a time range of the second response packet includes the current playback time; and inputting, to the buffer, data subsequent to the detected key frame.

The client operating method may further include estimating a new index corresponding to the current playback time when a time range of the second response packet does not include the current playback time; setting a third parameter instructing a data request as the new index; transmitting a third request packet that includes the file URL and the third parameter; receiving a third response packet that includes data of an address range corresponding to the third parameter within the file; and detecting a key frame closest to the current playback time from data of the third response packet.

The client operating method may further include receiving a seek time; detecting a key frame corresponding to the seek time based on key frame information of the file; setting the second parameter as an address of the detected key frame; and inputting data of the second response packet to a buffer.

The client operating method may further include receiving a seek time; estimating a chunk corresponding to the seek time based on the seek time and a total playback time of the file; setting the second parameter as an index of the estimated chunk; detecting a key frame closest to the seek time from data of the second response packet when a time range of the second response packet includes the seek time; and inputting, to the buffer, data subsequent to the detected key frame.

The client operating method may further include estimating a new index corresponding to the seek time when the time range of the second response packet does not include the seek time; setting a third parameter instructing a data request as the new index; transmitting a third request packet that includes the file URL and the third parameter; receiving a third response packet that includes data of an address range corresponding to the third parameter within the file; and detecting a key frame closet to the seek time from data of the third response packet.

According to another aspect, there is provided an operating method of a server for a streaming service, the method including receiving a request packet that includes a file URL and a parameter; transmitting, as a response, data of an address range corresponding to the parameter within a file corresponding to the file URL when the parameter instructs a data request; and transmitting, as a response, playback information of the file when the parameter instructs a playback information request.

The transmitting of the data may include at least one of transmitting, as a response, data of an address range corresponding to an index within the file when the parameter includes the index; and transmitting, as a response, data of an address range corresponding to an address within the file when the parameter includes the address.

The transmitting of the data of the address range corresponding to the address may include at least one of transmitting, as a response, data between two addresses within the file when the parameter includes the two addresses; and transmitting, as a response, data between a single address within the file and an end of the file when the parameter includes the single address.

The transmitting of the playback information may include at least one of transmitting as a response a size of a chunk used to divide the file, a number of chunks, a resolution of content stored in the file, a URL of a second file that stores content of a second resolution different from the resolution, and the second resolution when the parameter includes a predetermined first instructor; and transmitting, as a response, the size of the chunk and the number of chunks when the parameter includes a predetermined second instructor.

### BRIEF DESCRIPTION OF DRAWINGS

FIG. 1 illustrates an example of describing an operating method of a client according to an example embodiment.
FIGS. 2 through 7 illustrate examples of describing an operating method of a server according to example embodiments.
FIG. 8 illustrates an example of describing a basic operation of a client according to an example embodiment.
FIGS. 9 through 11 illustrate examples of describing an operation of acquiring key frame information according to example embodiments.
FIGS. 12 through 14 illustrate examples of describing a resolution change operation according to example embodiments.
FIGS. 15 through 17 illustrate examples of describing a seeking operation according to example embodiments.
FIGS. 18 and 19 illustrate examples of describing an operation of a client using a plurality of url streams according to example embodiments.

### BEST MODE

Hereinafter, example embodiments will be described with reference to the accompanying drawings. Like reference numerals illustrated in the respective drawings refer to like elements throughout. The example embodiments may be applicable to a client or a server for a streaming service.

Here, a client according to an example embodiment refers to a computing device that is provided with a streaming service, and may include, for example, a personal computer (PC), a laptop computer, a tablet computer, a personal digital assistant (PDA), a smartphone, etc. A client application, for example, a swf player, etc., communicating with the server using an http protocol, may be installed on the client. A server according to an example embodiment refers to a computing device that is provided with the streaming service, and may include, for example, a web server. The server may be configured as a PC, a laptop computer, a tablet computer, a PDA, a smartphone, etc., as well as a server exclusive computing device. A server application, for example, apache server, etc., communicating with a client using the http protocol may be installed on the server.

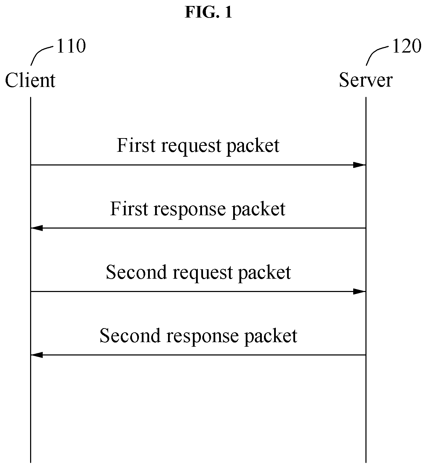

FIG. 1 illustrates an example of describing an operating method of a client according to an example embodiment. Referring to FIG. 1, a client 110 transmits a first request packet to a server 120. The first request packet may include a file uniform resource locator (URL) and a first parameter instructing a playback information request. Here, the file URL refers to information used to uniquely instruct a resource on a computer network. For example, the file URL may be information used to uniquely instruct an image file that is a target of a streaming service. The first parameter instructing the playback information request may be a predetermined character or character string, for example, 'i' or 'r', etc. The client 110 may request playback information of a file corresponding to the file URL by transmitting the first request packet to the server 120. Playback information of the file is information used to play back the file through the streaming service, and may include, for example, information in which a file is divided for transmission, and the like.

The client 110 receives a first response packet from the server 120. The first response packet may include playback information of the file corresponding to the file URL. As described above, example embodiments may provide a streamlining technology for dividing and thereby transmitting a file based on a capacity unit. Here, each capacity unit used to divide the file may be referred to as a chunk.

According to an example embodiment, a size of a chunk used to divide the file may be determined at the server 120. The server 120 may calculate a number of chunks used to divide the file based on the size of the chunk. In this case, playback information of the first response packet may include the size of the chunk and the number of chunks. Alternatively, the server 120 may include the size of the chunk and a total size of the file in the first response packet. In this case, the client 110 may calculate the number of chunks required to divide the file based on the size of the chunk and the total size of the file.

According to another example embodiment, the size of the chunk used to the file may be determined at the client 120. The client 120 may include the size of the chunk in the first parameter and may transmit the first parameter to the server 120. The server 120 may calculate the number of chunks used to divide the file based on the received size of the chunk. In this case, playback information of the first response packet may include the number of chunks. Alternatively, the server 120 may include the total size of the file in the first response packet. In this case, since the client 110 is already aware of the size of the chunk, the client 110 may calculate the number of chunks used to divide the file based on the total size of the file.

The client 110 transmits a second request packet to the server 120. The second request packet may include the file URL and a second parameter instructing a data request. The second parameter instructing a data request may be a number or a character string indicating an in-file address, for example, 'addressr' or 'address1raddress2', etc. Hereinafter, the in-file address may be a byte address. The client 110 may request at least a portion of the file corresponding to the file URL based on a capacity unit by transmitting the second request packet to the server 120.

The client 110 receives a second response packet from the server 120. The second response packet may include data of an address range corresponding to the second parameter within the file corresponding to the file URL. The client 110 may input data of the second response packet to a buffer. Data input to the buffer may be played back through a de-multiplexer and/or a decoder.

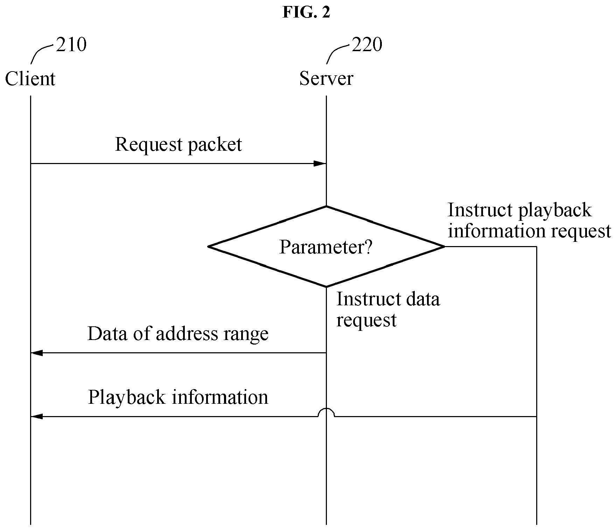

FIGS. 2 through 7 illustrate examples of describing an operating method of a server according to example embodiments. Referring to FIG. 2, a server 220 according to an example embodiment receives a request packet from a client 210. The request packet may include a file URL and a parameter. The file URL refers to information used to uniquely instruct a resource on a computer network. For example, the file URL may be information used to instruct the file that is stored in the server 220.

The server 220 may determine whether the parameter instructs a data request or a playback information request. For example, the server 220 may determine whether the parameter included in the request packet is a first parameter instructing the playback information request or a second parameter instructing the data request. The first parameter instructing the playback information request and the second parameter instructing the data request may be determined in advance. The server 220 and the client 210 may share the predetermined first parameter and second parameter.

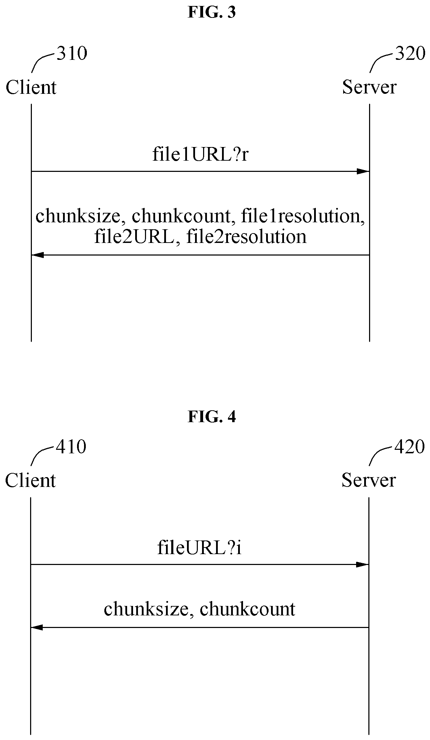

When the parameter instructs the playback information request, the server 220 may transmit, as a response, playback information of a file. For example, referring to FIG. 3, a server 320 may receive a request packet that includes a file1 URL and a first instructor from a client 310. Here, the first instructor may be a predetermined character or character string, for example, 'r'. The file1 URL and the first instructor within the request packet may be separated based on a predetermined symbol, for example, '?'. The server 320 may determine whether the parameter included in the request packet includes the first instructor.

When the parameter included in the request packet includes the first instructor, the server 320 may transmit, as a response, a size of a chunk (chunk size) used to divide a first file corresponding to the file1 URL, a number of chunks (chunk count), and a file list. The file list may include a resolution of a first file and a URL and a resolution of at least one file that stores content of a resolution different from a first resolution of content stored in the first file. For example, the file list may include a resolution of content stored in the first file (file1resolution), a URL of a second file that stores content of a second resolution different from the first resolution (file2URL), and a second resolution (file2resolution) thereof, etc. When a plurality of files stores content of a resolution different from the first resolution, the file list may include URLs and resolutions of the plurality of files.

The server 320 may retrieve at least one file storing content of a resolution different from the first resolution from a directory that stores the first file corresponding to the file1 URL. For example, when files of Table 1 are stored in a directory that stores the first file and the first file is 'musicvideo.mp4', the server 320 may retrieve 'musicvideo_720p.mp4', 'musicvideo_480p.mp4', and 'musicvideo_360p.mp4'.

**[Table 1]**

| |
|---|
| musicvideo.mp4 |
| musicvideo_720p.mp4 |
| musicvideo_480p.mp4 |
| musicvideo_360p.mp4 |

In this case, the server 320 may create a response packet as shown in Table 2, and may transmit the response packet to the client 310.

**[Table 2]**

| | | | | | | | | |
|---|---|---|---|---|---|---|---|---|
| 2097152 | 97 | 1080 | URL2 | 720 | URL3 | 480 | URL4 | 360 |

Here, in the response packet, a first element is a chunk size, a second element is a chunk count, a third element is a file1resolution, a fourth element is a file2URL, a fifth element is a file2resolution, a sixth element is a file3URL, a seventh element is a file3resolution, an eighth element is a file4URL, and a ninth element is a file4resolution. The chunk size may be a byte unit.

Depending on cases, the file list may include URLs and resolutions of all of files corresponding to the same content for a consistent data structure. For example, the file list may include a URL of a first file, a resolution of the first file, and a URL and a resolution of each of at least one file that stores content of a resolution different from the resolution of the first file. In this case, the server 320 may create a response file of Table 3, and may transmit the response packet to the client 310.

**[Table 3]**

| | | | | | | | | | |
|---|---|---|---|---|---|---|---|---|---|
| 2097152 | 97 | URL1 | 1080a | URL2 | 720 | URL3 | 480 | URL4 | 360 |

Here, in the response packet, a first element is a chunk size, a second element is a chunk count, a third element is a file1URL, a fourth element is a file1resolution, a fifth element is a file2URL, a sixth element is a file2resolution, a seventh element is a file3URL, an eighth element is a file3resolution, a ninth element is a file4URL, and a tenth element is a file4resolution. The chunk size may be a byte unit. To indicate a resolution of a currently requested file, for example, the first file, as 1080, for example, file1resolution, a predetermined character or character string, for example, 'a' may be added at end of the file1resolution.

Each of files may include a resolution in a file name. For example, once uploading of 'musicvideo.mp4' that is a source image file is completed, the server 320 may encode 'musicvideo.mp4' at a new resolution. Here, the server 320 may assign the new resolution to a file name of the source image file and may determine the file name of the new resolution. In this case, the server 320 may acquire, that is, obtain a resolution of content stored in a corresponding file based on the file name.

As another example, referring to FIG. 4, a server 420 may receive a request packet that includes a file URL and a second instructor from a client 410. Here, the second instructor may be a predetermined character or character string, for example, 'i'. The file URL and the second instructor within the request packet may be separated based on a predetermined symbol, for example, '?'. The server 420 may determine whether a parameter included in the request packet is the second instructor. When the parameter included in the request packet includes the second instructor, the server 420 may transmit, as a response, a size of a chunk (chunk size) used to divide a file corresponding to the file URL and a number of chunks (chunk count).

For example, when the request packet is 'file3URL?i', the server 420 may create a response packet of Table 4, and may transmit the response packet to the client 410.

**[Table 4]**

| | |
|---|---|
| 1048576 | 86 |

Here, in the response packet, a first element is a chunk size and a second element is a chunk count. The chunk size may be a byte unit. Referring to Table 1, a chunk size used to divide each of files may be set to be different. Here, example embodiments are not limited thereto. For example, the chunk size used to divide each of the files may be set to be same.

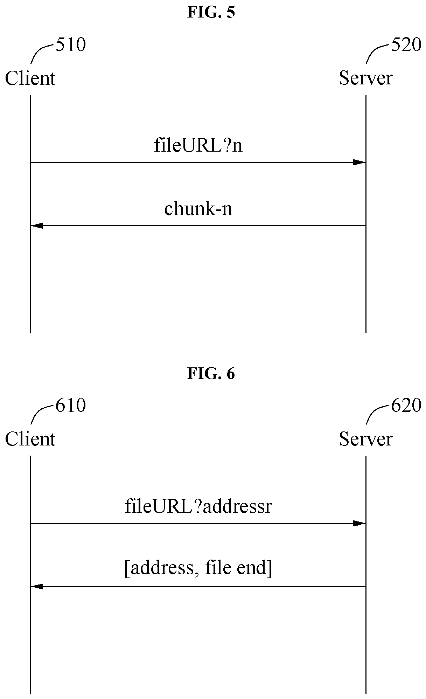

Referring again to FIG. 2, when the parameter instructs a data request, the server 220 may transmit, as a response, data of an address range corresponding to a parameter in a file corresponding to the file URL. For example, referring to FIG. 5, a server 520 may receive a request packet that includes the file URL and an index from a client 510. Here, the index may be an integer greater than or equal to 0. The file URL and the index within the request packet may be separated based on a predetermined symbol, for example, '?'. The server 520 may determine whether a parameter included in the request packet includes the index. When the parameter included in the request packet includes the index, the server 520 may transmit, as a response, data of an address range corresponding to the index in the file corresponding to the file URL.

For example, when the request packet is 'fileURL?n', the server 520 may acquire a size of a chunk used to divide the file corresponding to the file URL. When the chunk size of for the file includes 2097152 bytes, the server 520 may transmit data of Table 5 to the client 510. The data of Table 5 may be referred as chunk-n.

**[Table 5]**

| |
|---|
| [(2097152)*n, (2097152)*(n+1)-1] |

Here, [first byte address, second byte address] denotes data from the first byte address to the second byte address.

As another example, the request packet that includes the file URL and the index may include a header. The header may include an address range parameter. The header may be an http header. The server 520 may transmit partial data of a chunk corresponding to the index to the client 510 using the address range parameter included in the header of the request packet. For example, when the chunk size for the file corresponding to the file URL included in the request packet includes 2097152 bytes, the index included in the request packet is n, and the address range parameter of the request packet is provided in a format of (start range, end range), the server 520 may transmit data of Table 6 to the client 510.

**[Table 6]**

| |
|---|
| [(2097152)*n + start range, (2097152)*n + end range] |

Here, a unit for start range and end range may be a byte. The server 520 may include a cache server. The cache server may cache chunk data based on the file URL and the index. In this case, when a different address range parameter is included in the header of the request packet, however, the same file URL and index are included in the request packet, chunk data cached on the cache server may be used.

As another example, referring to FIG. 6, a server 620 may receive a request packet that includes a file URL and an address from a client 610. Here, the address may be a byte address. The file URL and the address within the request packet may be separated based on a predetermined symbol, for example, '?'. To distinguish the address and the index, the predetermined character or character string, for example, 'r' may be added at rear of the address. The server 620 may determine whether a parameter included in the request packet includes the address. When the parameter included in the request packet includes the address, the server 620 may transmit, as a response, data of an address range corresponding to the address within the file corresponding to the file URL.

For example, when the request packet includes 'fileURL?addressr', the server 620 may transmit data of Table 7 to the client 610.

**[Table 7]**

| |
|---|
| [address, file end] |

Here, [address, file end] denotes data from the address to the file end.

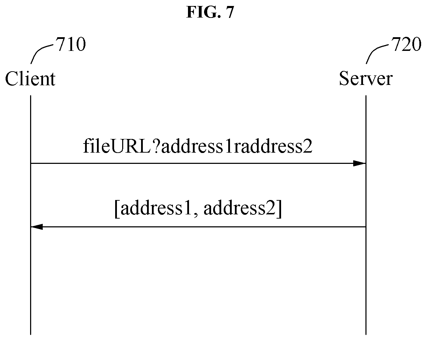

As another example, referring to FIG. 7, a server 720 may receive a request packet that includes a file URL and a plurality of addresses, for example, a first address and a second address, from a client 710. Here, each of the plurality of addresses may be a byte address. The file URL and the plurality of addresses within the request packet may be separated based on a predetermined symbol, for example, '?'. To distinguish the plurality of addresses, a predetermined character or character string, for example, 'r' may be added between the plurality of addresses. The server 720 may determine whether the parameter included in the request packet includes the plurality of addresses. When the parameter included in the request packet includes the plurality of addresses, the server 720 may transmit, as a response, data of an address range corresponding to the plurality of addresses within the file corresponding to the file URL.

For example, when the request packet includes 'fileURL?addresslraddress2', the server 720 may transmit data of Table 8 to the client 710.

**[Table 8]**

| |
|---|
| [address1, address2] |

Here, [address1, address2] denotes data from the first address to the second address.

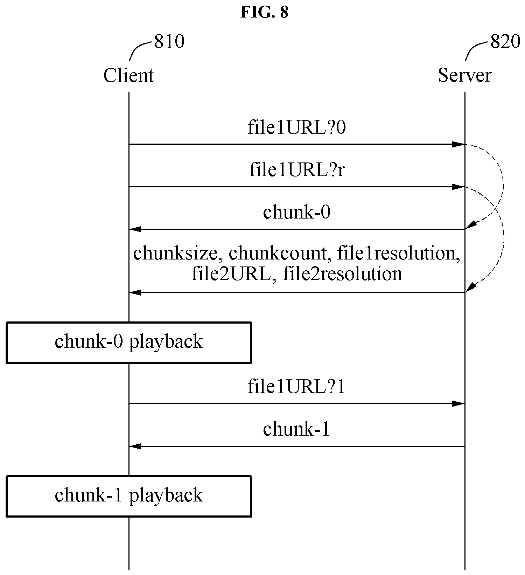

FIG. 8 illustrates an example of describing a basic operation of a client according to an example embodiment. Referring to FIG. 8, a client 810 according to an example embodiment may acquire a URL, for example, 'file1URL', of a first file to be played back through a streaming service. The client 810 may transmit, to a server 820, a request packet, for example, 'file1URL?0' that requests an initial chunk of the first file. Also, the client 810 may transmit, to the server 820, a request packet, for example, 'file1URL?r' that requests playback information of the first file.

The client 810 may receive a response packet that includes playback information of the first file from the server 820. For example, playback information of the first file may include a chunk size, a chunk count, and a file list. The file list may include file1resolution, file2URL, and file2resolution, etc. The client 810 may extract playback information of the first file from the response packet.

The client 810 may receive the response packet that includes the first chunk, 'chunk-0', of the first file, for example from the server 820. The client 810 may play back 'chunk-0'. For example, the client 810 may input 'chunk-0' included in the response packet to a buffer. Data input to the buffer may be played back through a de-multiplexer and/or a decoder.

The client 810 may check a residual value of the buffer. For example, the client 810 may determine whether the residual value of the buffer is less than or equal to a threshold. The threshold may be a byte unit or a time unit. When the threshold is the time unit, a time unit threshold may be changed to a byte unit threshold based on a resolution of content being played back.

When the residual value of the buffer is less than or equal to the threshold, the client 810 may transmit a request packet that request a subsequent chunk of the first file to the server 820. For example, the client 810 may calculate an index for the subsequent chunk by adding 1 to an index of a chunk currently being played. When the index of the chunk currently being played is 0, the client 810 may transmit 'file1URL?1' to the server 820.

The client 810 may receive, from the server 820, the response packet that includes the subsequent chunk, for example, 'chunk-1'. The client 810 may play back 'chunk-1'. For example, the client 810 may input, to the buffer, 'chunk-1' included in the response packet. Data input to the buffer may be played back through a de-multiplexer and/or a decoder.

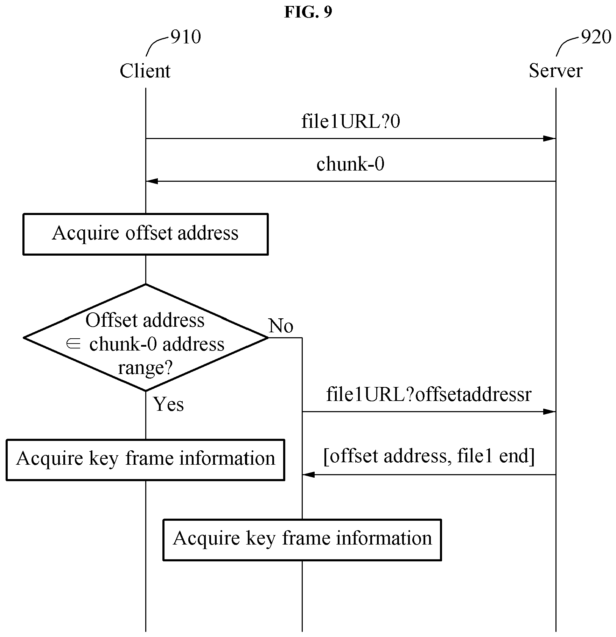

FIGS. 9 through 11 illustrate examples of describing an operation of acquiring key frame information according to example embodiments. A client according to an example embodiment may acquire key frame information of a first file to be played back through a streaming service. Content stored in the first file may include a plurality of frames. The plurality of frames may be classified into a frame that fully includes screen information and a frame that refers to another frame. The frame that fully includes screen information may be referred to as a key frame. The frame that refers to another frame does not fully include screen information of a corresponding frame and thus, may have a relatively small capacity compared to the key frame.

The key frame information of the first file may include information about key frames among the plurality of frames that constitutes the content stored in the first file. For example, the key frame information may include an index, a byte address, a timestamp, etc., of each of the key frames.

For example, the first file may store the key frame information. For example, when the first file is in an MP4 file format, the first file may store the key frame information. In this case, the client may acquire the key frame information by receiving, from a server, data of an address range in which the key frame information is stored.

In detail, referring to FIG. 9, the client 910 may transmit, to the server 920, a request packet, for example, 'file1URL?0' that requests an initial chunk of the first file. The client 910 may receive, from the server 920, a response packet that includes the initial chunk, for example, 'chunk-0', of the first file. The client 910 may extract an offset address of key frame information from the initial chunk of the first file.

The client 910 may determine whether the offset address is included within an address range of the initial chunk, and may determine whether data of the offset address is included in the initial chunk. When the offset address is included in the address range of the initial chunk, the client 910 may acquire the key frame information from the received initial chunk.

On the contrary, when the offset address is not included in the address range of the initial chunk, the client 910 may transmit, to the server 920, a request packet, for example, 'file1URL?offsetaddressr' that requests data subsequent to the offset address. The client 910 may receive a response packet that includes data, for example, [offset address, file1 end] subsequent to the offset address, and may extract the key frame information from the response packet.

As another example, the first file may not store key frame information. For example, when the first file is provided in an flv file format, the first file may not store key frame information. In this case, the client may create key frame information during playback of the first file.

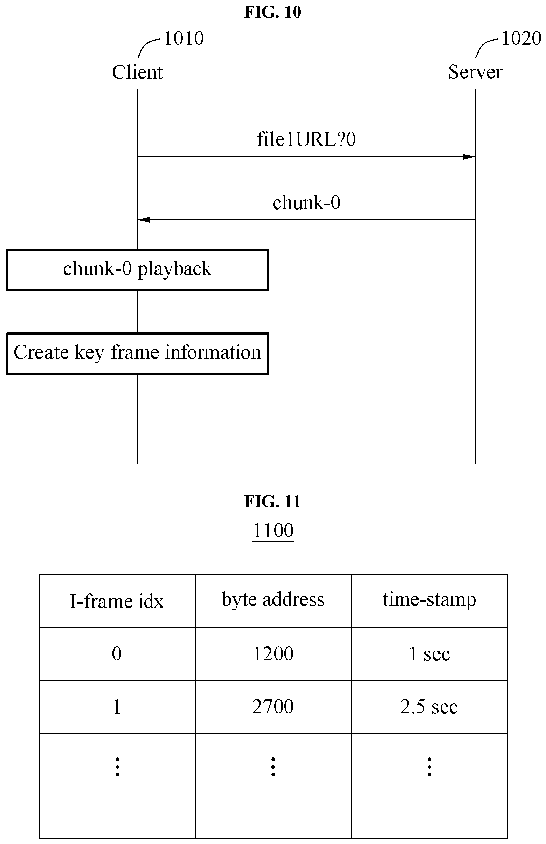

In detail, referring to FIG. 10, a client 1010 may transmit, to a server 1020, a request packet, for example, 'file1URL?0' that requests an initial chunk of a first file. The client 1010 may receive, from the server 1020, a response packet that includes the initial chunk, for example, 'chunk-0', of the first file. The client 1010 may play back 'chunk-0'. For example, the client 1010 may input, to a buffer, 'chunk-0' included in the response packet. Data input to the buffer may be played back through a de-multiplexer and/or a decoder.

The client 1010 may extract key frames included in 'chunk-0' during playing back of 'chunk-0'. The client 1010 may create key frame information for the first file based on the extracted key frames. For example, referring to FIG. 11, the client 1010 may create a seeking table 1100 that includes key frame information.

Although not illustrated, the client 1010 may create key frame information even during playback of another chunk aside from the initial chunk. For example, while content stored in the first file is being played back, the client 1010 may continuously update the seeking table 1100.

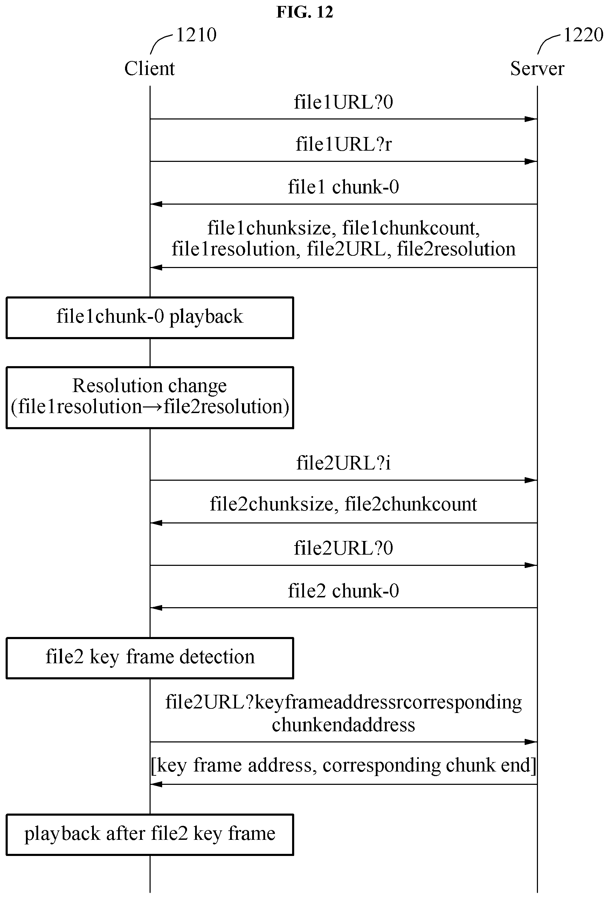

FIGS. 12 through 14 illustrate examples of describing a resolution change operation according to example embodiments. Referring to FIG. 12, a client 1210 according to an example embodiment may acquire a URL, for example, 'file1URL', of a first file to be played back through a streaming service. The client 1210 may transmit, to a server 1220, a request packet that request an initial chunk, for example, 'file1URL?0', of the first file. Also, the client 1210 may transmit, to the server 1220, a request packet that requests playback information, for example, 'file1URL?r', of the first file.

The client 1210 may receive, from the server 1220, a response packet that includes playback information of the first file. For example, playback information of the first file may include a chunk size, a chunk count, and a file list. The file list may include a file1resolution, a file2URL, and a file2resolution, etc. The client 810 may extract playback information of the first file from the response packet.

The client 1210 may receive, from the server 1220, a response packet that includes the first chunk, for example, 'file1 chunk-0', of the first file. The client 1210 may play back 'file1 chunk-0'. For example, the client 810 may input, to a buffer, 'file1 chunk-0' included in the response packet. Data input to the buffer may be played back through a de-multiplexer and/or a decoder.

The client 1210 may receive a resolution change input. For example, the client 1210 may provide a resolution of content currently being played back and/or a changeable resolution to the user through a predetermined interface. The client 1210 may receive the resolution change input through the interface.

Depending on cases, the client 1210 may automatically determine whether to change a resolution. For example, the client 1210 may automatically determine whether to change a resolution based on a communication state, a buffering, communication cost, and the like.

Hereinafter, an example embodiment of changing a resolution from a first resolution to a second resolution will be described. The client 1210 may transmit, to the server 1220, a request packet, for example, 'file2URL?i' that requests playback information of a second file corresponding to the second resolution. The client 1210 already has a resolution list. Thus, the client 1210 may request playback information of the second file using the second instructor, for example, 'i'. The client 1210 may receive, from the server 1220, a response packet that includes playback information of the second file. For example, playback information of the second file may include a chunk size and a chunk count.

The client 1210 may transmit, to the server 1220, a request packet, for example, 'file2URL?0' that requests an initial chunk of the second file. The client 1210 may receive, from the server 1220, a response packet that includes the initial chunk, for example, 'file2 chunk-0', of the second file. Although not illustrated, the client 1210 may acquire key frame information of the second file. For example, the client 1210 may acquire key frame information of the second file based on the example embodiment of FIG. 9.

The client 1210 may detect a key frame corresponding to a current playback time based on key frame information of the second file. For example, the client 1210 may detect a key frame closet to a frame after a predetermined period of time, for example, one second, is elapsed after the current playback time. As another example, the client 1210 may detect a key frame corresponding to the current playback time based on buffer information of the first file. As another example, the client 1210 may detect a key frame corresponding to a time after an amount of the first file that is currently input to the buffer.

The client 1210 may transmit, to the server 1220, a request packet, for example, 'file2URL?keyframeaddressrcorrespondingchunkendaddress' that requests data subsequent to an address of the detected key frame. 'Correspondingchunkendaddress' is an end address of a chunk to which the detected key frame belongs, and the client 1210 may calculate the end address of the chunk to which the detected key frame belongs, based on playback information of the second file. Although not illustrated, the client 1210 may transmit, to the server 1220, a request packet, for example, 'file2URL?correspondingchunkindex' that requests the chunk to which the detected key frame belongs, and may request data of [key frame address, corresponding chunk end], using an address range parameter included in a header of the request packet. According to another example embodiment, the client 1210 may also request data of [key frame address, file end] by transmitting 'file2URL?keyframeaddressr' to the server 1220.

The client 1210 may receive a response packet that includes data, for example, [key frame address, corresponding chunk end address], subsequent to the key frame address. The client 1210 may play back the second file having a new resolution by inputting data subsequent to the key frame address to a buffer.

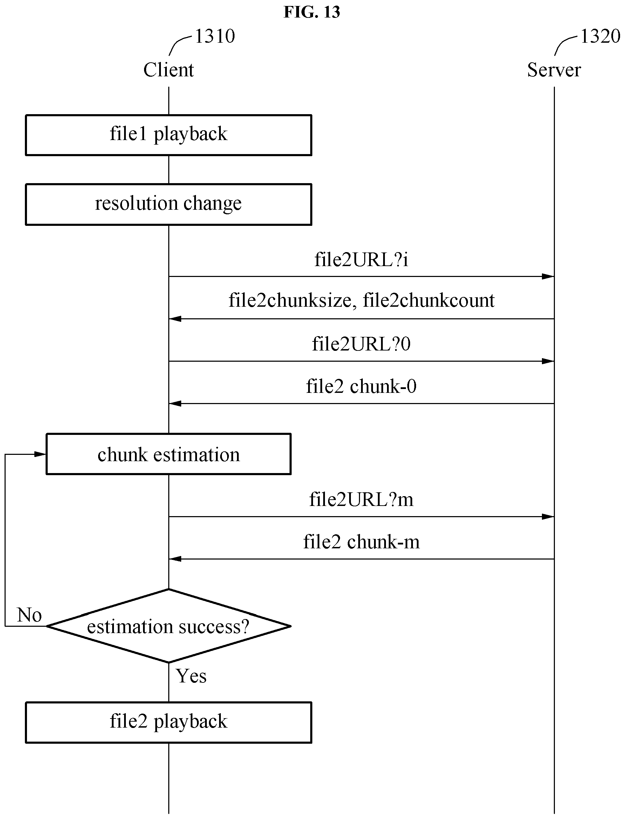

Referring to FIG. 13, a client 1310 according to another example embodiment may receive a resolution change input during playback of a first file. For example, the client 1310 may provide a resolution of content currently being played back and/or a changeable resolution to a user through a predetermined interface. The client 1310 may receive the resolution change input through the interface. Depending on cases, the client 1310 may automatically determine whether to change a resolution. For example, the client 1310 may automatically determine whether to change a resolution based on a communication state, a buffering, communication cost, and the like.

Hereinafter, an example embodiment of changing a resolution from a first resolution to a second resolution will be described. The client 1310 may transmit, to the server 1320, a request packet, for example, 'file2URL?i' that requests playback information of a second file. The client 1310 already has a resolution list. Thus, the client 1310 may request playback information of the second file using a second instructor, for example, 'i'. The client 1310 may receive, from the server 1320, a response packet that includes playback information of the second file. For example, playback information of the second file may include a chunk size and a chunk count.

The client 1310 may transmit, to the server 1320, a request packet, for example, 'file2URL?0' that requests an initial chunk of the second file. The client 1310 may receive, to the server 1320, a response packet that includes the initial chunk, for example, 'file2 chunk-0', of the second file.

Here, the second file may not store key frame information. In this case, the client 1310 may estimate a chunk corresponding to a current playback time among chunks of the second file based on the current playback time and a total playback time. For example, the client 1310 may estimate the chunk corresponding to the current playback time among the chunks of the second file based on a ratio of the current playback time to the total playback time.

The client 1310 may transmit, to the server 1320, a request packet, for example, 'file2URL?m' that requests data of the estimated chunk. Here, 'm' denotes an index of the estimated chunk. The client 1310 may receive a response packet that includes data, for example, 'file2 chunk-m', of the estimated chunk. The client 1310 may detect whether the estimation is a success based on data of the estimated chunk. For example, the client 1310 may determine whether the estimation is a success by comparing a time of a first frame within the estimated chunk to the current playback time.

When the estimation is determined to be a failure, the client 1310 may estimate a new chunk. When the estimation is determined to be a success, the client 1310 may extract key frames from the estimated chunk. The client 1310 may detect a key frame closest to the current playback time. The client 1310 may input data subsequent to the detected key frame to the buffer.

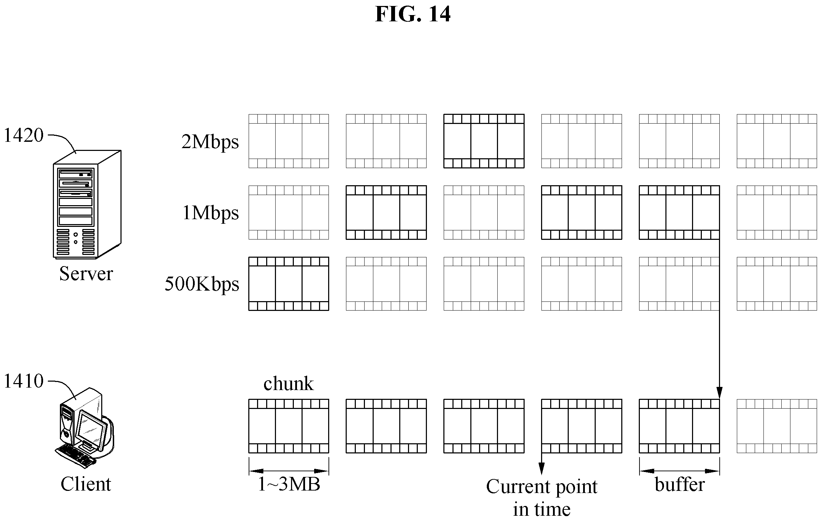

Referring to FIG. 14, a client 1410 according to an example embodiment may receive chunks from a server 1420 based on various bitrates. As described above, according to example embodiments, chunks may not be required to start as a key frame and may not include the key frame. Accordingly, the server 1420 has no need to perform encoding to be suitable for a chunk, and may divide and thereby transmit a general image file, such as MP4, flv, etc., based on a capacity unit. Since a condition that chunks transmitted between the server 1420 and the client 1410 start as a key frame or include the key frame is not required, example embodiments may support open GOP as well as closed GOP.

The client 1410 may download in advance chunks by a size of a buffer. The client 1410 may store played back chunks and thus, may prevent duplicate downloading of corresponding chunks when playing back again frames included in the stored chunks.

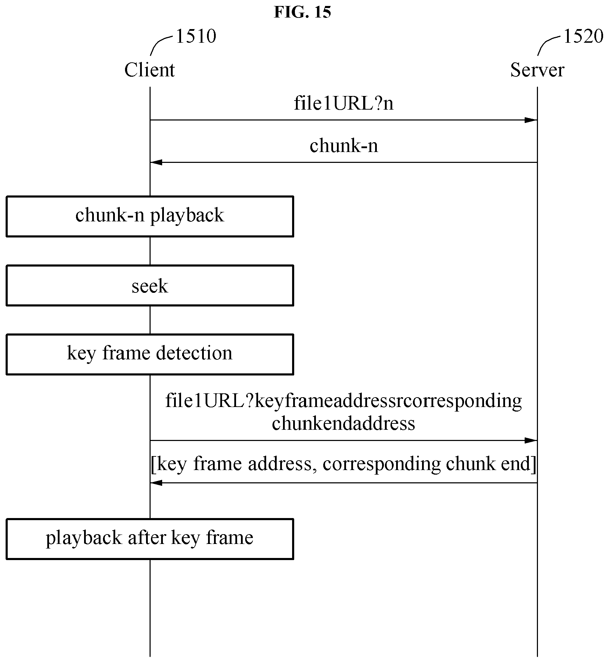

FIGS. 15 through 17 illustrate examples of describing a seeking operation according to example embodiments. The seeking operation is an operation of randomly accessing content. Referring to FIG. 15, a client 1510 according to an example embodiment may transmit, to a server 1520, a request packet, for example, 'file1URL?n' that requests an n-th chunk of a first file. The client 1510 may receive, from the server 1520, a response packet that includes an n-th chunk, for example, 'chunk-n', of the first file. The client 1510 may input 'chunk-n' to a buffer. Data input to the buffer may be played back through a de-multiplexer and/or a decoder.

The client 1510 may receive a seek input during playback of 'chunk-n'. For example, the client 1510 may receive the seek input through a predetermined interface. The seek input may include a seek time.

The client 1510 may detect a key frame corresponding to the seek time based on key frame information of the first file. For example, the client 1510 may detect a key frame closest to a frame of the seek time.

The client 1510 may transmit, to the server 1520, a request packet, for example, 'file1URL?keyframeaddressrcorrespondingchunkendaddress' that requests data subsequent to an address of the detected key frame. 'Correspondingchunkendaddress' refers to an end address of a chunk to which the detected key frame belongs, and the client 1510 may calculate the end address of the chunk to which the detected key frame belongs based on playback information of the first file. Although not illustrated, the client 1510 may transmit, to the server 1520, a request packet, for example, 'file1URL?correspondingchunkindex' that requests the chunk to which the detected key frame belongs, and may request data of [key frame address, corresponding chunk end] using an address range parameter included in a header of the request packet.

The client 1510 may receive a response packet that includes data subsequent to the key frame address, for example, [key frame address, corresponding chunk end address]. The client 1510 may seek and play back the first file by inputting data subsequent to the key frame address to the buffer.

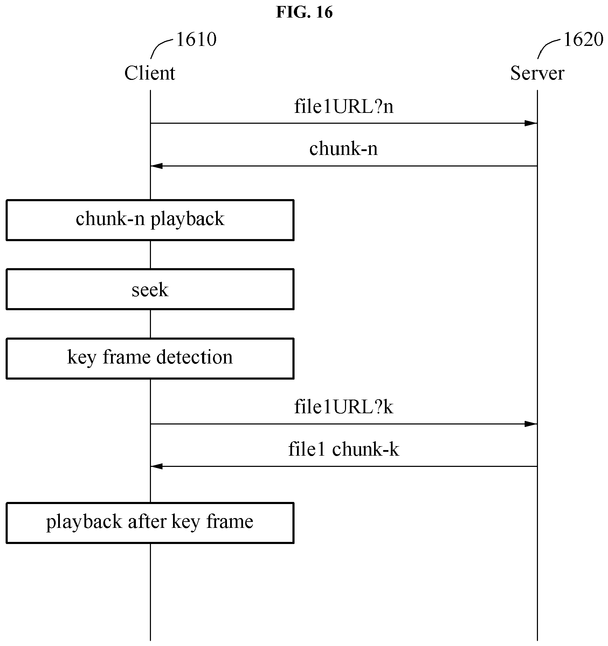

Referring to FIG. 16, a client 1610 according to an example embodiment may transmit 'file1URL?n' to a server 1620. The client 1610 may receive, from the server 1620, a response packet that includes 'chunk-n'. The client 1610 may play back 'chunk-n'.

The client 1610 may receive a seek input during playback of'chunk-n'. The client 1610 may detect a key frame corresponding to a seek time based on key frame information of a first file. For example, the client 1610 may detect a key frame closest to a frame of the seek time.

The client 1610 may transmit, to the server 1620, a request packet, for example, 'fileURL?k' that requests data of a chunk to which the detected key frame belongs. Here, 'k' denotes an index of the chunk to which the detected key frame belongs. The client 1610 may receive a response packet that includes data, for example, 'file1 chunk-k', of the chunk to which the detected key frame belongs. The client 1610 may seek and play back the first file by inputting data subsequent to the key frame address to a buffer.

The seeking operation of FIG. 16 may enhance the efficiency of a cache server compared to the seeking operation of FIG. 15. The seeking operation of FIG. 15 may decrease an amount of data that is actually transmitted compared to the seeking operation of FIG. 16. The example embodiments may operate based on one of the seeking operation of FIG. 15 and the seeking operation of FIG. 16 into consideration of a tradeoff relationship between the efficiency of the cache server and the amount of data actually transmitted.

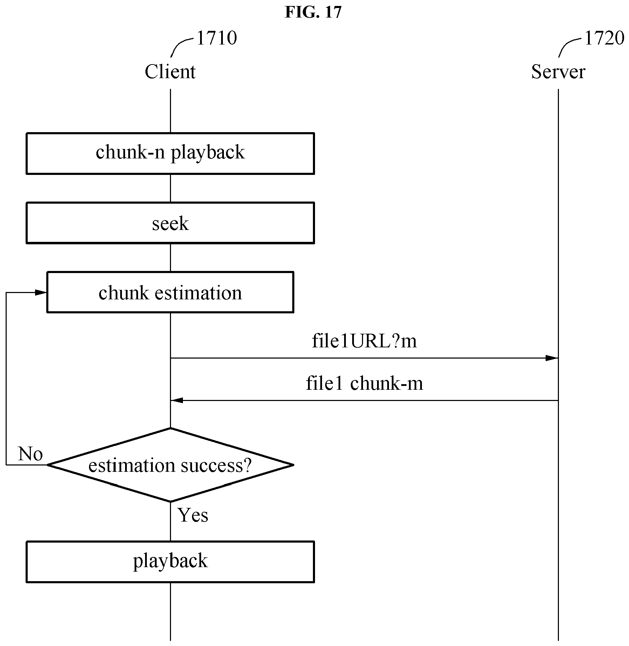

Referring to FIG. 17, a client 1710 according to another example embodiment may receive a seek input during playback of 'chunk-n'. The seek input may include a seek time. A first file currently being played back may not store key frame information. In this case, the client 1710 may create key frame information according to the example embodiments of FIGS. 10 and 11. However, a key frame corresponding to the seek time may not be included in key frame information yet.

The client 1710 may estimate a chunk corresponding to a current playback time among chunks of the first file based on the current playback time and a total playback time. For example, the client 1710 may estimate the chunk corresponding to the current playback time among chunks of the first file, based on a ratio of the current playback time to the total playback time.

The client 1710 may transmit, to the server 1720, a request packet, for example, 'file1URL?m' that requests data of the estimated chunk. Here, 'm' denotes an index of the estimated chunk. The client 1710 may receive a response packet that includes data, for example, 'file1 chunk-m', of the estimated chunk. The client 1710 may determine whether the estimation is a success based on data of the estimated chunk. For example, the client 1710 may determine whether the estimation is a success by comparing a time in a first frame of the estimated chunk to the current playback time.

When the estimation is determined to be a failure, the client 1710 may estimate a new chunk. When the estimation is determined to be a success, the client 1710 may extract key frames form the estimated chunk. The client 1710 may detect a key frame closest to the current playback time. The client 1710 may input data subsequent to the detected key frame to a buffer.

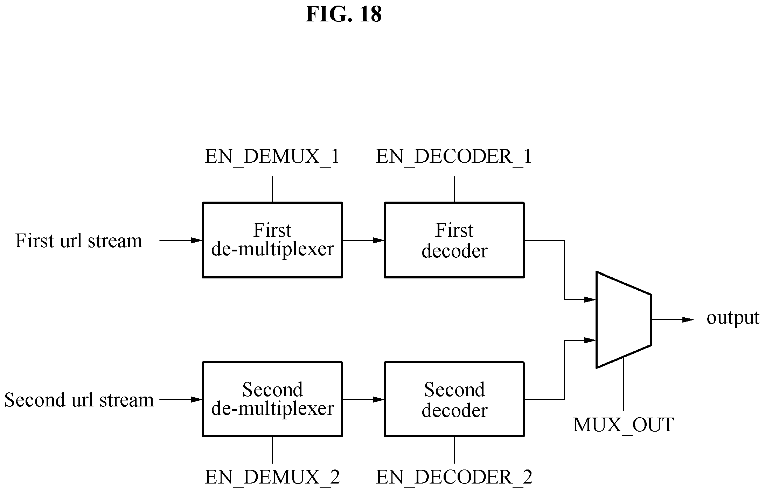

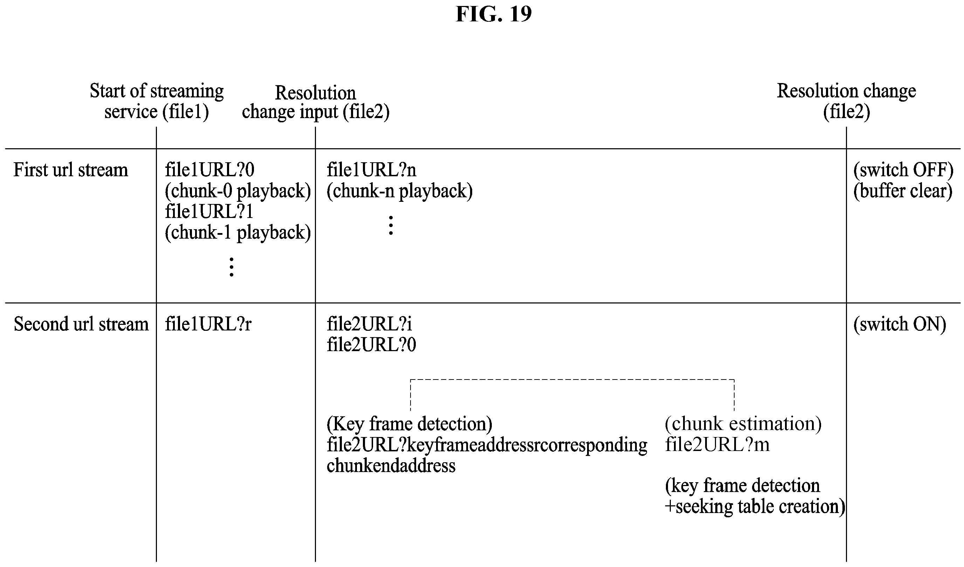

FIGS. 18 and 19 illustrate examples of describing an operation of a client using a plurality of url streams according to example embodiments. Referring to FIG. 18, a client according to an example embodiment may perform a resolution changing operation and/or a seeking operation using a plurality of url streams. Hereinafter, description is made based on an example in which the client uses two url streams.

Each of a first url stream and a second url stream may create a request packet and transmit the created request packet to a server, and may process a response packet received from the server. Data of the first url stream may be played back through a first de-multiplexer and a first decoder. Data of the second url stream may be played back through a second de-multiplexer and a second decoder.

According to an example embodiment, the first de-multiplexer and the second de-multiplexer may be configured through a single device. For example, the first de-multiplexer and the second de-multiplexer may be configured in a form of two threads that use the same de-multiplexer device. Also, the first decoder and the second decoder may be configured through a single device. For example, the first decoder and the second decoder may be configured in a form of two threads that use the same decoder device.

Although not illustrated, according to another example embodiment, if a video file does not include a B-frame, the client may perform a resolution changing operation and/or a seeking operation using a single de-multiplexer and a single decoder. The B-frame may be a frame compressed by referring to subsequent frame information. For example, the B-frame may be a frame compressed by referring to previous frame information and subsequent frame information.

When the first file includes the B-frame and a buffer of a second file is linked and connected at back of a buffer of the first file, the B-frame included in the first file may refer to the second file instead of referring to the first file. Accordingly, an error may occur. When the first file does not include the B-frame, the buffer of the first file and the buffer of the second file may be linked and connected. Thus, there is no need to distinguish a buffer input line input to a decoder. Accordingly, the client may perform a resolution changing operation and/or a seeking operation using a single decoder.

The client may determine whether the B-frame is included in the video file and may select an operation mode.

The client may control data flows of data of the first url stream and data of the second url stream based on at least one of a signal EN_DEMUX_1 for controlling the first de-multiplexer, a signal EN_DECODER_1 for controlling the first decoder, a signal EN_DEMUX_2 for controlling the second de-multiplexer, a signal EN_DECODER_2 for controlling the second decoder, and a signal MUX_OUT for controlling an output multiplexer.

For example, referring to FIG. 19, in response to a start of a streaming service, a client may sequentially play back from an initial chunk of a first file using a first url stream. Here, the client may receive playback information of the first file using a second url stream.

In response to a resolution change input, the client may detect a key frame corresponding to a current playback time among key frames of a second file using the second url stream while playing back the first file using the first url stream. To change a resolution, the client may control a data flow of the first url stream and a data flow of the second url stream at a playback point in time of the detected key frame.

For example, the client may switch OFF the data flow of the first url stream and may switch ON the data flow of the second url stream. Depending on cases, the client may control the data flow of the first url stream and the data flow of the second url stream to be switched ON during a preset period of time, for example, 30 ms, based on a delay of a de-multiplexer and/or a decoder.

The client may play back data subsequent to the detected key frame using the second url stream. The client may clear a buffer for the first url stream. Although not illustrated, in response to an additional resolution change input, the client may process the additional resolution change input by simply switching roles of the first url stream and the second url stream in the aforementioned process.

Although not illustrated, as another example, when the first file does not include the B-frame, the client may detect a key frame corresponding to a current buffer amount among key frames of the second file using the second url stream while playing back the first file using the first url stream in response to the resolution change input. Here, the current buffer amount may be an amount of the first file that is currently input to the buffer. The client may detect a key frame of the second file corresponding to a time after the current buffer amount.

In response to the resolution change input to the second file during playback of the first file, the client may detect a key frame of the second file corresponding to a playback time after an amount of the first file input to the buffer of the decoder. The client may input the buffer of the second file to be connected at rear of the buffer of the first file by inputting data of the first file to the buffer only before a playback time of the detected key frame of the second file and by inputting data of the second file subsequent to the key frame of the second file to the same buffer.

In this case, although the client does not perform a separate operation, the resolution change operation and/or the seeking operation may be executed at a playback time corresponding to the key frame of the second file. For example, the client may not perform a separate switching ON/OFF operation. Also, the client may not perform a buffer clearing operation. The first url stream may create the buffer of the first file corresponding to a previous time of the key frame of the second frame. Once the buffer input of the first file is completed, the second url stream may link the buffer of the second file to be connected at rear of the buffer of the first file.

The example embodiments described herein may be implemented using hardware components, software components, and/or a combination thereof. For example, the apparatuses, methods, and constituent elements described in the example embodiments may be implemented using one or more general-purpose or special purpose computers, such as, for example, a processor, a controller, an arithmetic logic unit (ALU), a digital signal processor, a microcomputer, a field programmable array (FPGA), a programmable logic unit (PLU), a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciate that a processing device may include multiple processing elements and multiple types of processing elements. For example, a processing device may include multiple processors or a processor and a controller. In addition, different processing configurations are possible, such as parallel processors.

The software may include a computer program, a piece of code, an instruction, or some combination thereof, to independently or collectively instruct and/or configure the processing device to operate as desired, thereby transforming the processing device into a special purpose processor. Software and/or data may be embodied permanently or temporarily in any type of machine, component, physical or virtual equipment, computer storage medium or device, or in a propagated signal wave capable of providing instructions or data to or being interpreted by the processing device. The software also may be distributed over network coupled computer systems so that the software is stored and executed in a distributed fashion. The software and data may be stored by one or more non-transitory computer readable recording mediums.

The methods according to the above-described example embodiments may be recorded in non-transitory computer-readable media including program instructions to implement various operations of the above-described example embodiments. The media may also include, alone or in combination with the program instructions, data files, data structures, and the like. The program instructions recorded on the media may be those specially designed and constructed for the purposes of example embodiments, or they may be of the kind well-known and available to those having skill in the computer software arts. Examples of non-transitory computer-readable media include magnetic media such as hard disks, floppy disks, and magnetic tape; optical media such as CD-ROM discs and DVDs; magneto-optical media such as optical discs; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The above-described devices may be configured to act as one or more software modules in order to perform the operations of the above-described example embodiments, or vice versa.

A number of example embodiments have been described above. Nevertheless, it should be understood that various modifications may be made to these example embodiments. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. An operating method of a client for a streaming service, the method comprising:
transmitting a first request packet that includes a file uniform resource locator (URL) and a first parameter instructing a playback information request;
receiving a first response packet that includes playback information of a file corresponding to the file URL;
transmitting a second request packet that includes the file URL and a second parameter instructing a data request; and
receiving a second response packet that includes data of an address range corresponding to the second parameter within the file.

2. The method of claim 1, wherein the playback information includes at least one of a size of a chunk used to divide the file and a number of chunks.

3. The method of claim 1, further comprising:
setting the first parameter as a predetermined first instructor; and
extracting a size used to divide the file, a number of chunks, a resolution of content stored in the file, a URL of a second file that stores content of a second resolution different from the resolution, and the second resolution from the first response packet.

4. The method of claim 1, further comprising:
setting the second parameter as an initial index; and
inputting data of the second response packet to a buffer.

5. The method of claim 1, further comprising:
checking a residual value of a buffer;
setting the second parameter as an index of a chunk to be sequentially played back when the residual value of the buffer is less than or equal to a threshold; and
inputting data of the second response packet to the buffer.

6. The method of claim 1, further comprising:
setting the second parameter as an initial index; and
extracting an offset address for key frame information of the file from the second response packet.

7. The method of claim 6, further comprising:
extracting the key frame information from the second response packet when data of the offset address is included in the second response packet.

8. The method of claim 6, further comprising:
setting a third parameter instructing a data request as the offset address when data of the offset address is not included in the second response packet;
transmitting a third request packet that includes the file URL and the third parameter;
receiving a third response packet that includes data of an address range corresponding to the third parameter within the file; and
extracting the key frame information from the third response packet.

9. The method of claim 1, further comprising:
inputting data of the second response packet to a buffer;
extracting key frames of the file during playback of the data; and
creating key frame information of the file based on the key frames.

10. The method of claim 1, further comprising:
receiving a resolution change input;
setting the file URL as a URL of a second file corresponding to a new resolution included in the resolution change input;
setting the first parameter as a predetermined second instructor; and
extracting a size of a chunk used to divide the second file and a number of chunks from the first response packet.

11. The method of claim 1, further comprising:
receiving a resolution change input;
setting the file URL as a URL of a second file corresponding to a new resolution included in the resolution change input;
detecting a key frame corresponding to a current playback time based on key frame information of the second file;
setting the second parameter as an address of the detected key frame; and
inputting data of the second response packet to a buffer.

12. The method of claim 11, wherein the second parameter includes an address of the detected key frame and an end address of a chunk to which the detected key frame belongs.

13. The method of claim 11, wherein the buffer is a second buffer distinguished from a buffer currently being used, and
data of the second buffer is played back after a time of the detected key frame.

14. The method of claim 1, further comprising:
receiving a resolution change input;
setting the file URL as a URL of a second file corresponding to a new resolution included in the resolution change input;
estimating a chunk corresponding to a current playback time based on the current playback time and a total playback time;
setting the second parameter as an index of the estimated chunk;
detecting a key frame closest to the current playback time from data of the second response packet when a time range of the second response packet includes the current playback time; and
inputting, to the buffer, data subsequent to the detected key frame.

15. The method of claim 14, further comprising:
estimating a new index corresponding to the current playback time when a time range of the second response packet does not include the current playback time;
setting a third parameter instructing a data request as the new index;
transmitting a third request packet that includes the file URL and the third parameter;
receiving a third response packet that includes data of an address range corresponding to the third parameter within the file; and
detecting a key frame closest to the current playback time from data of the third response packet.

16. The method of claim 14, wherein the buffer is a second buffer distinguished from a buffer currently being used, and
data of the second buffer is played back after a time of the detected key frame.

17. The method of claim 1, further comprising:
receiving a seek time;
detecting a key frame corresponding to the seek time based on key frame information of the file;
setting the second parameter as an address of the detected key frame; and
inputting data of the second response packet to a buffer.

18. The method of claim 17, wherein the second parameter includes an address of the detected key frame and an end address of a chunk to which the detected key frame belongs.

19. The method of claim 17, wherein the buffer is a second buffer distinguished from a buffer currently being used, and
data of the second buffer is played back after a time of the detected key frame.

20. The method of claim 1, further comprising:
receiving a seek time;
estimating a chunk corresponding to the seek time based on the seek time and a total playback time of the file;
setting the second parameter as an index of the estimated chunk;
detecting a key frame closest to the seek time from data of the second response packet when a time range of the second response packet includes the seek time; and
inputting, to the buffer, data subsequent to the detected key frame.

21. The method of claim 20, further comprising:
estimating a new index corresponding to the seek time when the time range of the second response packet does not include the seek time;
setting a third parameter instructing a data request as the new index;
transmitting a third request packet that includes the file URL and the third parameter;
receiving a third response packet that includes data of an address range corresponding to the third parameter within the file; and
detecting a key frame closet to the seek time from data of the third response packet.

22. The method of claim 20, wherein the buffer is a second buffer distinguished from a buffer currently being used, and
data of the second buffer is played back after a time of the detected key frame.

23. The method of claim 1, wherein the client uses an http protocol for communication with a server.

24. The method of claim 1, wherein the first parameter includes a size of a chunk used to divide the file, and
the playback information includes at least one of a number of chunks and a size of the file.

25. An operating method of a server for a streaming service, the method comprising:
receiving a request packet that includes a file uniform resource locator (URL) and a parameter;
transmitting, as a response, data of an address range corresponding to the parameter within a file corresponding to the file URL when the parameter instructs a data request; and
transmitting, as a response, playback information of the file when the parameter instructs a playback information request.

26. The method of claim 25, wherein the playback information includes at least one of a size of a chunk used to divide the file and a number of chunks.

27. The method of claim 25, wherein the transmitting of the data comprises determining whether the parameter includes an index or an address.

28. The method of claim 25, wherein the transmitting of the data comprises at least one of:
transmitting, as a response, data of an address range corresponding to an index within the file when the parameter includes the index; and
transmitting, as a response, data of an address range corresponding to an address within the file when the parameter includes the address.

29. The method of claim 25, wherein the address range corresponding to the index is determined based on a size of a chunk used to divide the file.

30. The method of claim 25, wherein the transmitting of the data of the address range corresponding to the address comprises at least one of:
transmitting, as a response, data between two addresses within the file when the parameter includes the two addresses; and
transmitting, as a response, data between a single address within the file and an end of the file when the parameter includes the single address.

31. The method of claim 25, wherein the transmitting of the playback information comprises at least one of:
transmitting, as a response, a size of a chunk used to divide the file, a number of chunks, a resolution of content stored in the file, a URL of a second file that stores content of a second resolution different from the resolution, and the second resolution when the parameter includes a predetermined first instructor; and
transmitting, as a response, the size of the chunk and the number of chunks when the parameter includes a predetermined second instructor.

32. The method of claim 31, wherein the second file is retrieved based on at least one of a file name of the file and a directory stored in the file.

33. The method of claim 31, wherein the second resolution is acquired based on a file name of the second file.

34. The method of claim 25, wherein the server uses an http protocol for communication with a client.

35. The method of claim 25, further comprising:
receiving a size of a chunk used to divide the file,
wherein the playback information includes at least one of a number of chunks and a size of the file.

36. A computer-program stored in media to implement a method according to one of claims 1 through 35 in conjunction with hardware.
